(19)

Europäisches
Patentamt
European
Patent Office
Office européen
des brevets

(11)  **EP 4 491 934 A1**

(12)  **EUROPEAN PATENT APPLICATION**
published in accordance with Art. 153(4) EPC

(43) Date of publication:
**15.01.2025  Bulletin 2025/03**

(21) Application number: **22931107.1**

(22) Date of filing: **09.08.2022**

(51) International Patent Classification (IPC):
**F17C 13/02** (2006.01)

(52) Cooperative Patent Classification (CPC):
**F17C 13/02;** Y02E 60/32

(86) International application number:
**PCT/KR2022/011840**

(87) International publication number:
**WO 2023/171860 (14.09.2023 Gazette 2023/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **10.03.2022  KR 20220029829**

(71) Applicant: **Korea Institute of Machinery &
Materials
Daejeon 34103 (KR)**

(72) Inventors:
• **PARK, Ji Su
  Daejeon 34103 (KR)**

• **KIM, Tae Hoon
  Daejeon 34069 (KR)**
• **DO, Kyu Hyung
  Daejeon 34070 (KR)**
• **YOU, Hwa Long
  Busan 48029 (KR)**
• **CHOI, Byung Il
  Daejeon 35247 (KR)**
• **HAN, Yong Shik
  Daejeon 34140 (KR)**

(74) Representative: **Ström & Gulliksson AB
P.O. Box 793
220 07 Lund (SE)**

(54)  **LIQUEFIED HYDROGEN STORAGE TANK ZBO SYSTEM**

(57)    Provided is a liquid hydrogen storage tank ZBO system which controls a temperature and pressure inside a storage tank by rapidly operating a refrigerator by inferring a delay time through measurement of a heat flux on an outer surface of the tank using an infrared sensor and which includes a sensor pad attached to one surface of a storage tank, a calculator configured to calculate a heat flux value by using the sensor pad, and a controller configured to control an operation of a refrigerator.

FIG. 4

EP 4 491 934 A1

## Description

## Technical Field

The technology described in the description relates to a liquid hydrogen storage tank ZBO system, and more particularly, to a system for controlling a temperature and pressure inside a storage tank by rapidly operating a refrigerator by measuring a heat flux on an outer surface of the storage tank and predicting a delay time.

## Background Art

In order to improve storage performance of a storage tank, insulation performance of the storage tank is very significant. In the case where heat intrusion from the outside is not appropriately blocked, a boil-off gas is generated inside the storage tank to increase pressure inside the storage tank, and accordingly, the boil-off gas (BOG) needs to be released to appropriately maintain the pressure of the storage tank. Accordingly, conventionally, there is an issue in which a loss of a material stored inside the storage tank occurs. Therefore, a technology for effectively controlling a flow rate is needed to efficiently improve performance of a storage tank.

An existing liquid hydrogen storage tank zero boil-off (ZBO) system controls an internal temperature and pressure by operating a refrigerator to be turned on/off or operating the refrigerator at all times by measuring pressure inside a tank caused by a boil off gas generated by heat flowing into the tank. Therefore, in the case of an existing ZBO system using a pressure rise caused by a BOG generated by introduced heat as a refrigerator control variable, a volume of a liquid hydrogen storage tank is considerable, and thus, a time delay occurs in a period for which heat flowing into from the outside passes through an insulation wall or a time delay occurs in a period of a temperature rise due to latent heat before liquid evaporates, i.e., a time delay occurs until a temperature and pressure of the expanded liquid hydrogen storage tank are controlled.

Accordingly, in order to solve issues of an existing technology for cooling the inside of a liquid hydrogen storage tank, there is a growing need for a technology that may rapidly control an amount of heat by predicting a time for and an amount by which a heat flux passes through an insulation material of a storage tank and permeates into liquid hydrogen.

## Disclosure

## Technical Problem

The technical problem to be solved by a liquid hydrogen storage tank ZBO system of the present disclosure is to provide a system capable of rapidly controlling a cooling start rate of a liquid hydrogen storage tank by using a sensor pad attached to a particular area of the liquid hydrogen storage tank, an infrared measurement apparatus, and a calculator for calculating a heat flux value on an outer surface of the storage tank and a delay time by using received data.

The technical problem to be solved by a liquid hydrogen storage tank ZBO system of the present disclosure is to provide a system capable of maintaining a heat flux value of a liquid hydrogen storage tank at zero by using a sensor pad attached to a particular area of the liquid hydrogen storage tank, an infrared measurement apparatus, and a calculator for calculating a heat flux value on an outer surface of the storage tank and a delay time by using received data.

The technical problems to be solved by a liquid hydrogen storage tank ZBO system of a technology described in the description are not limited to the problems for solving the problems mentioned above, and other problems not mentioned may be clearly understood by those skilled in the art from the following description.

## Technical Solution

A liquid hydrogen storage tank ZBO system according to an embodiment of the present disclosure may include a sensor pad attached to one surface of the storage tank, a calculator configured to calculate a heat flux value by using the sensor pad, and a controller configured to offset heat energy flowing into the storage tank by considering a delay time predicted from the heat flux value.

According to an embodiment, the calculator may be configured to calculate the heat flux value by using infrared energy emitted from the sensor pad.

According to an embodiment, the ZBO system may further include an infrared measurement apparatus configured to measure an amount of infrared energy emitted from the sensor pad, and the calculator may be configured to calculate the heat flux value by receiving the amount of infrared energy measured from the infrared measurement apparatus.

According to an embodiment, operation control of the controller may be based on at least one delay time from among a time taken for heat energy to pass through an insulation material of the storage tank and a time for temperature rise due to latent heat.

According to an embodiment, operation control of the controller may include power control of a refrigerator.

According to an embodiment, operation control of the controller may include control of a flow rate of a refrigerant of the refrigerator.

According to an embodiment, the ZBO system may further include a refrigerant refrigeration system, and the refrigerant refrigeration system may be configured to control at least one of an expansion turbine, a heat exchanger, a compressor configured to use energy generated from the expansion turbine as power, and an expander.

According to an embodiment, a first surface of the sensor pad may be entirely coated with an infrared black coating, and a second surface of the sensor pad may be partially coated with the infrared black coating.

According to an embodiment, the calculation of the heat flux value may include assuming a temperature of a substrate of the sensor pad as a particular value, calculating a temperature of the first surface of the sensor pad by using an amount of infrared energy and the assumed temperature of the substrate, determining a final temperature of the first surface by repeating assuming and calculating operations until the temperature of the substrate calculated by using the calculated temperature of the first surface is equal to the assumed temperature of the substrate, and calculating a heat flux value outside the storage tank from the final temperature of the first surface.

A liquid hydrogen storage tank ZBO method according to an embodiment of the present disclosure may include measuring an amount of infrared energy emitted from a sensor pad attached to one surface of the storage tank, calculating a heat flux value on an outer surface of the storage tank by using the measured amount of infrared energy, and controlling an operation of a controller by considering a delay time predicted from the heat flux value.

According to an embodiment, the control of the operation of the controller may include at least one of power control of a refrigerator and control of a flow rate of a refrigerant of the refrigerator.

According to an embodiment, the control of the operation of the controller may be based on at least one delay time from among a time taken for heat energy to pass through an insulation material of the storage tank and a time for temperature rise due to latent heat.

A computer program stored on a medium, according to an embodiment of the present disclosure, may be a computer program stored on a medium, which includes computer-readable instructions configured to perform a method according to an embodiment of the present disclosure.

**Advantageous Effects**

A liquid hydrogen storage tank ZBO system according to an embodiment of a technology described in the description has the following effects.

The present disclosure has the effect of rapidly controlling, by using a heat flux on an outer surface of a tank as a control variable in a liquid hydrogen storage tank, a temperature and pressure of the storage tank by predicting a time for and an amount by which heat passes through an insulation wall of the storage tank and flows into the tank. In other words, internal liquid may be preemptively cooled, and evaporation of LH2 may be minimized through the preemptive cooling.

Also, operating power may be saved by reducing an operating time of a refrigerator by controlling the refrigerator through an amount of heat flowing into rather than internal pressure of the storage tank.

In addition, the present disclosure may be easily used not only in the case of adjusting internal pressure of a liquid hydrogen storage tank but also in the case of adjusting internal pressure of another object.

Also, the present disclosure may provide a method of calculating a heat flux on an outer surface of the liquid hydrogen storage tank from the outside by using an infrared measurement apparatus.

However, effects according to an embodiment of the technology described in the description are not limited to those mentioned above, and other effects not mentioned may be clearly understood by those skilled in the art from the following description.

**Brief Description of Drawings**

Simple descriptions of respective drawings are provided to further fully understand the drawings used in the description.

FIG. 1 schematically illustrates a liquid hydrogen storage tank system in which a BOG is generated, according to the related art.
FIG. 2 schematically illustrates an existing liquid hydrogen storage tank ZBO system.
FIG. 3 schematically illustrates a system for controlling a time delay in a liquid hydrogen storage tank ZBO system described in the description.
FIG. 4 illustrates a system for implementing a liquid hydrogen storage tank ZBO system according to an embodiment of a technology described in the description.
FIG. 5 schematically illustrates a liquid hydrogen storage tank according to an embodiment of a technology described in the description.
FIG. 6 illustrates a detailed structure of a sensor pad used in the description.
FIG. 7 illustrates an energy distribution of a sensor pad for analyzing a heat flux described in the description.
FIG. 8 sequentially illustrates respective operations of a method of analyzing a heat flux in a liquid hydrogen storage tank ZBO system, according to an embodiment of a technology described in the description.
FIG. 9 schematically illustrates a power control system of a refrigerator according to an embodiment of a technology described in the description.
FIG. 10 illustrates a flowchart of a power control system of a refrigerator, according to an embodiment of a technology described in the description.
FIG. 11 schematically illustrates a refrigerant flow rate control system according to an embodiment of a technology described in the description.
FIG. 12 illustrates a flowchart of a refrigerant flow rate control system according to an embodiment of a technology described in the description.

## Mode for Invention

The technology used herein may be modified in various ways and have various embodiments, and particular embodiments are illustrated in the drawings and described in detail through the detailed description. However, it should be understood that the technology used herein is not intended to be limited to particular embodiments, but the technology used herein includes all modifications and/or equivalents or alternatives included in the spirit and scope of the technology used herein.

When describing the technology used herein, the detailed description of related known arts, which may obscure the subject matter of the technology used herein, will be omitted. In addition, numbers (e.g., a first, a second, etc.) used in the description are merely identification symbols to distinguish one component from another component.

Also, as used herein, when one component is referred to as being "connected" or "coupled" to another component, the one component may be directly connected or coupled to the other component, but unless the context clearly indicates otherwise, it should be understood that the components may be connected or coupled to each other through another component therebetween.

In addition, as used herein, a component expressed as " ~unit" may indicate that two or more components are combined into one component or one component is divided into two or more components according to more detailed functions. Also, each of components described below may additionally perform some or all of functions performed by other components, in addition to a main function thereof, and some of main functions performed by respective components may be performed exclusively by other components.

The expressions such as "first", "second", etc. used in various embodiments may modify various components regardless of order and/or importance, and do not limit corresponding components. For example, a first component may be referred to as a second component without departing from the scope of the technology used herein, and similarly, the second component may also be referred to as a first component.

Hereinafter, embodiments of the present disclosure for solving the above problems are sequentially described in detail.

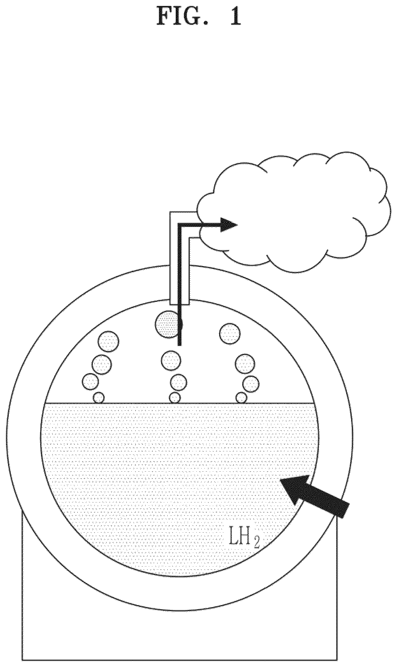

First, FIG. 1 illustrates a liquid hydrogen storage tank system in which a BOG is generated, according to the related art.

Insulation performance of a storage tank highly significantly operates to increase storage performance of the storage tank. In the case where heat intrusion from the outside of the storage tank is not appropriately blocked, as shown in FIG. 1, a boil-off gas (BOG) is generated inside the storage tank, and the BOG increases pressure inside the storage tank. As a result, the boil-off gas is released to the outside to appropriately maintain the pressure inside the storage tank, and accordingly, energy loss occurs due to the storage tank.

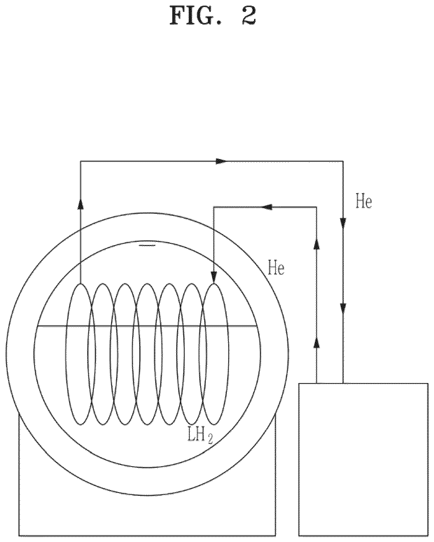

FIG. 2 schematically illustrates an existing liquid hydrogen storage tank ZBO system.

Subsequently, a zero boil-off (ZBO) system is used to solve an issue of a storage tank in an existing method described above, and the existing system operates to measure pressure inside the storage tank in which a BOG is generated and in the case where the measured pressure reaches threshold pressure, turn power of a refrigerator on/off or operate the refrigerator all the time. In the corresponding system, a heat exchanger in which cooled refrigerant (He) circulates may be installed inside the storage tank, and in the case where power of the refrigerator is turned on, the boil-off gas to be released to the outside may be eliminated by offsetting heat energy flowing into from the outside of the storage tank.

However, even in the case of the liquid hydrogen storage tank ZBO system according to the related art, in the case where a pressure rise due to the boil off-gas generated by the heat flowing into is used as a control variable for the operation of the refrigerator, a time delay occurs while the heat flowing into from the outside passes through an insulation material of the storage tank and reaches an inner wall, or a time delay occurs during a temperature rise due to latent heat before liquid evaporates. Accordingly, about 4 days or more are taken from a start time of the operation of the refrigerator at threshold pressure to an end time of the operation of the refrigerator which is taken to lower pressure and temperature inside the storage tank.

Therefore, a ZBO system for a liquid hydrogen storage tank according to the present disclosure preemptively offsets, by considering a delay time of heat passing through an insulation material, an amount of heat flowing into through an inner wall of the tank by an amount of heat flowing into from the outside by predicting a time at which heat flows into the tank, through transient analysis of the insulation material according to a heat flux on an outer surface of the tank. The heat flux refers to an amount of heat per unit area and unit time, and thus, measuring the heat flux refers to measuring an amount of heat in a sensor area over time.

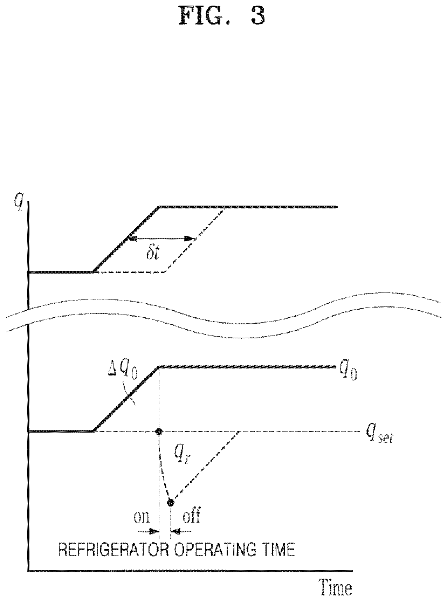

FIG. 3 schematically illustrates a system for controlling a time delay in a liquid hydrogen storage tank ZBO system described in the description.

Referring to the upper graph of FIG. 3, an amount of heat on an outer surface of a tank over time is indicated by a solid line, and an amount of heat on an inner surface of the tank is indicated by a dotted line. Here, $\delta_t$ indicates a time taken for heat passing through an outer wall of the storage tank to pass through an insulation material and reach an inner wall.

Accordingly, as shown in the lower graph of FIG. 3, in the present disclosure, an amount of heat flowing into through the inner wall of the tank is preemptively offset by an amount of heat flowing into from the outside by considering a delay time taken for heat on the outer surface of the tank to pass through the insulation material and reach the inner wall.

First, a reference value ($q_{set}$) of the amount of heat on the outer surface of the storage tank, which is preset in the ZBO system according to an embodiment of the present disclosure, may satisfy Equation 1 below.

[Equation 1]

$$q_{set} = 0 \quad \text{or} \quad q_{set} < hf$$

(hf: latent heat of storage fluid; an amount of heat needed for the storage fluid to boil)

Accordingly, in the case where the amount of heat flowing into from the outer surface of the storage tank exceeds the reference value ($q_{set}$), a refrigerator needs to be operated by considering a delay time taken for the heat flux on the outer surface of the storage tank to reach the inner wall. Here, $\triangle q_0 = q_f(q_r$: an amount of refrigeration heat; an amount of heat exchange with a refrigerant) may be satisfied in the graph.

Meanwhile, in the case of a ZBO system according to the present disclosure, a time ($\delta_t$) taken for heat to pass through the insulation material may be numerically calculated according to Equation 2 using the following Fourier number. Here, in the case of a commercial storage tank, data, which is precalculated according to characteristics of an insulation material and the storage tank, may be used, and thus, an additional calculation may not be needed. The time ($\delta_t$) taken for the heat to pass through the insulation material refers to a time at which a temperature of the inner wall of the storage tank starts to change due to the heat flux flowing onto the outer wall of the storage tank.

[Equation 2]

$$\delta_t = F_o \times L^2 / \alpha$$

($F_o$: Fourier number, $\propto$: thermal diffusion coefficient, L: thickness of insulation material)

Meanwhile, in the related art that does not measure a heat flux value passing through an outer wall of a tank, a boil off gas (BOG) and a boil off rate (BOR) of evaporating fluid are calculated by performing three-dimensional complex numerical analysis considering boiling of stored fluid and heat transfer by convection, and the calculation takes about 30 days to 60 days.

Here, the refrigerator may operate faster than the time taken for heat to pass through the insulation material. Therefore, a delay time ($\triangle t$) may be set to a value obtained by subtracting a circulation time of one cycle of a refrigerant supplied to a cooling unit (e.g., a heat exchange tube) from the time ($\delta_t$) taken the heat to pass through the insulation material. In other words, $\triangle t \leq \delta_t$.

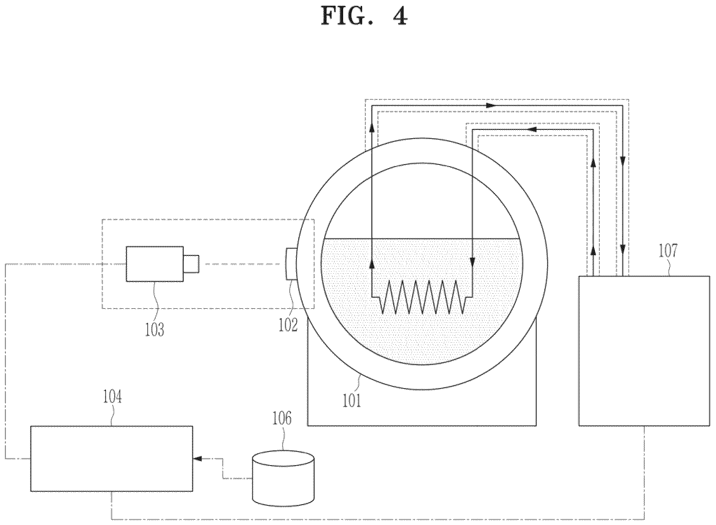

FIG. 4 illustrates a system for implementing a liquid hydrogen storage tank ZBO system according to an embodiment of a technology described in the description.

A ZBO system for a liquid hydrogen storage tank according to the present disclosure may largely include a storage tank 101, a sensor pad 102, an energy measurement apparatus, a calculator 104, a controller 106, and a refrigerator 107.

The storage tank 101 may be configured to store fluid inside, and the sensor pad 102 may be configured to be attached to an outer surface of the storage tank 101 and emit infrared energy. The energy measurement apparatus refers to, for example, an infrared measurement apparatus 103 and may be configured to measure an amount of infrared energy emitted from the sensor pad 102. The calculator 104 may be configured to calculate a heat flux value on the outer surface of the storage tank 101 and predict a delay time, by using the measured amount of infrared energy. The refrigerator 107 may be configured to offset heat energy flowing into the storage tank 101, and the controller 106 may be configured to control an operation of the refrigerator 107 on the basis of a calculation value by considering the delay time predicted from the heat flux value.

The operation of the refrigerator 107 may be controlled on the basis of at least one predicted value from among a time taken for heat energy to pass through an insulation material of the storage tank 101 and a time for temperature rise due to latent heat.

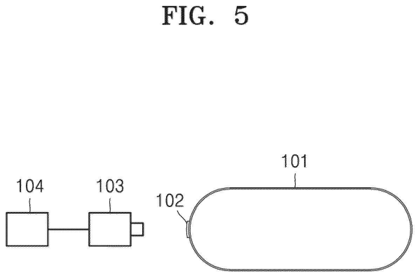

FIG. 5 schematically illustrates a liquid hydrogen storage tank according to an embodiment of a technology described in the description.

FIG. 5 illustrates that a sensor pad 102 may be attached to a particular surface of a liquid hydrogen storage tank 101, and provided may be a system capable of measuring a heat flux on the particular surface instead of measuring a total average heat flux for the liquid hydrogen storage tank 101 by attaching the sensor pad 102 to the particular surface of the liquid hydrogen storage tank 101. Here, an infrared measurement apparatus 103 measures infrared energy generated from the sensor pad 102, and the infrared measurement apparatus 103 may be, for example, an infrared camera. A calculator 104 may calculate a heat flux by using an infrared energy value received from the infrared measurement apparatus 103.

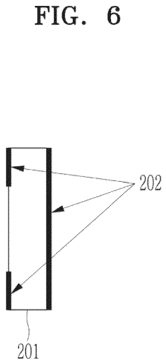

FIG. 6 schematically illustrates a structure of the sensor pad 102 used in the description.

As illustrated in FIG. 6, the sensor pad 102 includes a substrate 201 and an infrared black coating 202. The sensor pad 102 according to an embodiment may have one surface (a first surface) entirely coated with the infrared black coating 202 and the other surface (a second surface) partially coated with the infrared black coating 202. The substrate 201 may be included inside the sensor pad 102. The substrate 201 according to an embodiment may have an infrared transmittance of 0.95 (95 %) or more and a heat conductivity of 20 W/mK or less. Also, the infrared black coating 202 may have an infrared transmittance of 0.05 (5 %) or less. Numerical ranges of the infrared transmittance and heat conductivity of the substrate 201, and the infrared transmittance of the infrared black coating 20 are set to maximize efficiency of an insulation performance evaluation method, according to an embodiment, and the insulation performance evaluation method may be implemented even in a range other than the set numerical values, and thus is not limited to the range of the set numerical values. In addition, materials of the substrate 201 and the infrared black coating 202 are not limited to one particular material and may be any of materials that satisfy the above conditions.

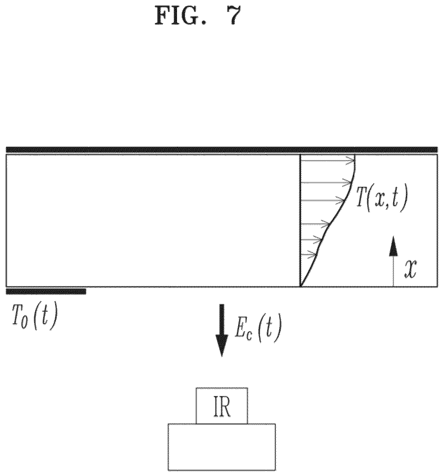

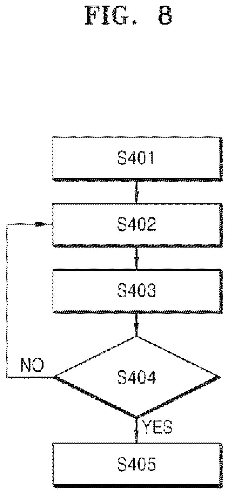

FIG. 7 illustrates an energy distribution of the sensor pad 102 for analyzing a heat flux, described in the description, and FIG. 8 sequentially illustrates respective operations of a method of analyzing a heat flux of the liquid hydrogen storage tank ZBO system, according to an embodiment of a technology described in the description.

Hereinafter, the method of analyzing a heat flux of the liquid hydrogen storage tank system, which is described in the description, is described in detail with reference to FIGS. 7 and 8.

Referring to FIG. 7, a temperature of the substrate 201 may be expressed as T(x, t), a temperature of a surface (a first surface) of the sensor pad 102, which is entirely coated with an infrared black coating, may be expressed as $T_b(t)$, and a temperature of a surface (a second surface) of the sensor pad 102, which is partially coated with the infrared black coating, may be expressed as $T_o(t)$. $E_c(t)$ indicates an amount of infrared energy emitted from the sensor pad 102.

The infrared measurement apparatus 103 may measure a value $E_c(t)$ that is the amount of infrared energy emitted from the sensor pad 102. Data measured by the infrared measurement apparatus 103 may be transmitted to the calculator 104, and the calculator 104 may calculate a heat flux flowing into a liquid hydrogen storage tank by performing detailed operations as follows.

In operation S401 of FIG. 8, first, a temperature T(x, $t_i$) of the substrate 201 is assumed as a particular value. A heat flux to be measured by a heat insulation performance evaluation method of the present disclosure refers to a heat flux on the surface (the first surface) of FIG. 6 entirely coated with an infrared black coting, but the data measured by the infrared measurement apparatus 103 does not indicate only infrared light emitted from the first surface. The data measured by the infrared measurement apparatus 103 indicates a value including both a portion of infrared energy emitted from the first surface passes through the substrate and infrared energy emitted from the substrate. Accordingly, the data measured by the infrared measurement apparatus 103 may be expressed in a radiant energy relational equation shown in Equation 3 below.

### [Equation 3]

$$E_c(t) = \tau E[T_b(t)] + E[T(x,t)]$$

Here, $\tau$ is an infrared transmittance at which energy emitted from an outer wall of a tank (a surface to which the sensor pad 102 is attached) passes through the sensor pad 102.

Subsequently, in operation S402, $T_b(t_i)$, which is a temperature of the first surface, may be calculated by substituting the temperature (T(x, $t_i$)) of the substrate assumed in operation S401 into Equation 3 above.

In subsequent operation S403, the temperature ($T_b(t_i)$) of the first surface may be used as a boundary condition (B.C.)to calculate Equation 4 below, and Equation 4 below is for numerically analytically solving a governed equation related to heat conduction inside the substrate 201.

### [Equation 4]

$$\frac{\partial^2 T(x,t)}{\partial x^2} = \frac{1}{\alpha} \frac{\partial T(x,t)}{\partial t}$$

B.C.: $T(L,t) = T_b(t)$, $T(O,t) = T_0(t)$

Here, $\alpha$ refers to thermal diffusivity of the substrate 201 and refers to a value obtained by dividing heat conductivity of the substrate 201 by density and specific heat.

As a result of calculating Equation 4 according to the boundary condition (B.C.),a temperature distribution of the substrate 201 may be obtained. Here, L is a length between the first surface and the second surface of the sensor pad 102.

In operation S404, an operation of determining whether or not the temperature of the substrate 201 obtained in operation S403 is the same as the temperature of the substrate 201 assumed in operation S401 is performed. Here, in the case where both pieces of data are the same, subsequent operation S405 is performed, but in the case where both the pieces of data are not the same, the same detailed operation is repeatedly performed by returning to operation S402 and newly assuming a temperature value of the substrate 201.

In operation S405, the calculator 104 may finally determine the value, which is determined to be the same value in operation S404, as the temperature of the substrate 201 and calculate a heat flux according to Equation 5 below.

[Equation 5]

$$HeatFlux = k_f \left. \frac{\partial T}{\partial x} \right|_{at\ block\ coating}$$

Here, $k_f$ is heat conductivity of a block coating layer.

Provided may be a system capable of rapidly controlling a cooling start rate of a liquid hydrogen storage tank by using a heat flux value calculated in each of the operations.

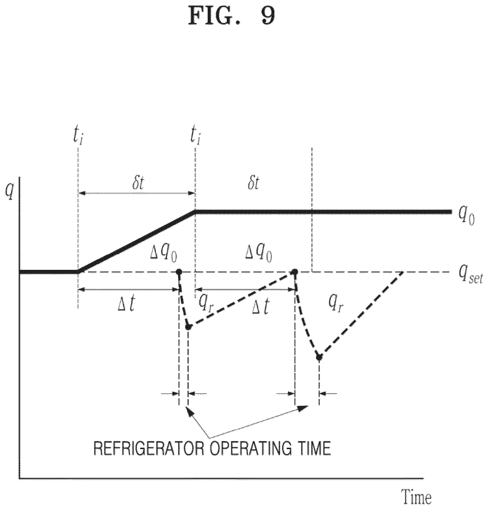

FIG. 9 schematically illustrates a power control system of a refrigerator according to an embodiment of the technology described in the description, and

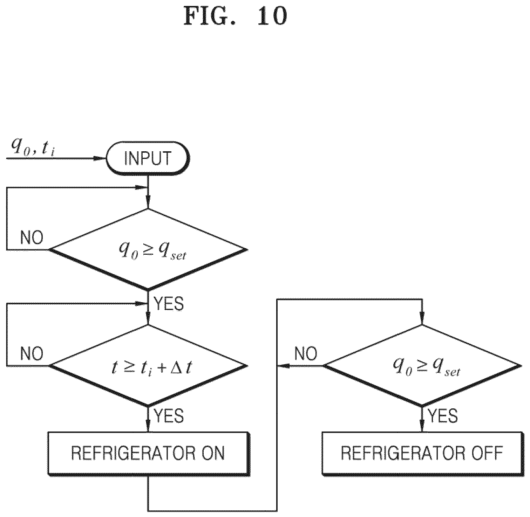

FIG. 10 illustrates a flowchart of a power control system of a refrigerator, according to an embodiment of the technology described in the description.

Operation control of the refrigerator 107 may include power control of the refrigerator 107. In other words, in the present embodiment, the refrigerator 107 is controlled to be turned on/off.

First, an operation of determining whether or not a heat flux value on an outer surface of a storage tank, which is obtained from the sensor pad 102, i.e., an amount of heat $q_0$ measured on the outer surface of the storage tank, exceeds a reference value $q_{set}$ is performed. Here, the reference value $q_{set}$ is 0 or a value less than latent heat of storage fluid. In the case where the amount of heat $q_0$ measured on the outer surface of the storage tank is less than the reference value $q_{set}$, the determination process may be repeatedly performed by returning to the beginning.

However, in the case where the amount of heat $q_0$ measured on the outer surface of the storage tank exceeds the reference value $q_{set}$, an operation of comparing a current time t with a time obtained by adding a predicted delay time $\triangle_t$ to a time $t_i$ at which the amount of heat starts to flow into is performed. In the case where the current time t is greater than or equal to the time obtained by adding the predicted delay time $\triangle_t$ to the time $t_i$ at which the amount of heat starts to flow into, power of the refrigerator 107 is turned on. In the case where the current time t is less than the time obtained by adding the predicted delay time $\triangle_t$ to the time $t_i$ at which the amount of heat starts to flow into, the determination process may be repeatedly performed by returning to the previous operation.

After turning on the power of the refrigerator 107, a determination process of comparing an amount of refrigeration heat $q_r$, i.e., an amount of heat absorbed by a refrigerant that circulates, with an amount of heat $\triangle q_0$ flowing into from the outside is performed. In the case where the amount of refrigeration heat $q_r$ is greater than or equal to the amount of heat $\triangle q_0$ flowing into from the outside, the power of the refrigerator 107 may be turned off, and in the case where the amount of refrigeration heat $q_r$ is less than the amount of heat $\triangle q_0$ flowing into from the outside, the determination process may be repeatedly performed by returning to the previous operation.

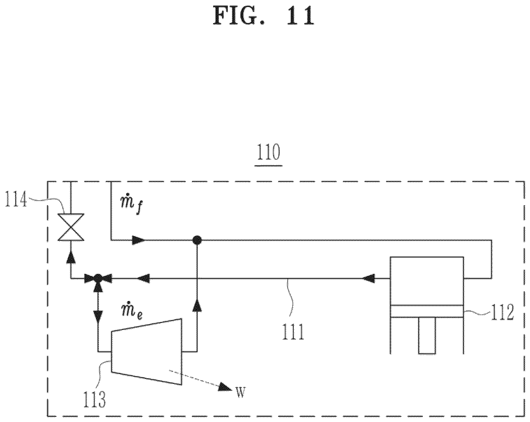

FIG. 11 schematically illustrates a refrigerant flow rate control system according to an embodiment of the technology described in the description.

As another embodiment of a liquid hydrogen storage tank ZBO system according to the present disclosure, operation control of the controller 106 may include control of a flow rate of a refrigerant of the refrigerator 107, and accordingly, a refrigerant refrigeration system 110 may be further included. Here, the refrigerator 107 is operated all the time, and the flow rate of the refrigerant may be controlled.

The refrigerant refrigeration system 110 may be configured to control at least one of an expansion turbine 113, a heat exchanger 111, a compressor 112 configured to use energy generated from the expansion turbine 113 as power, and an expander 114.

By controlling the flow rate of the refrigerant He, efficiency of a refrigerator may be increased by using energy generated from the expansion turbine 113 as power of the compressor 112.

The refrigerant refrigeration system 110 including such a refrigerant flow rate control system may control a heat flux on an inner wall of the storage tank 101 to be maintained at 0 or a reference value $q_{set}$.

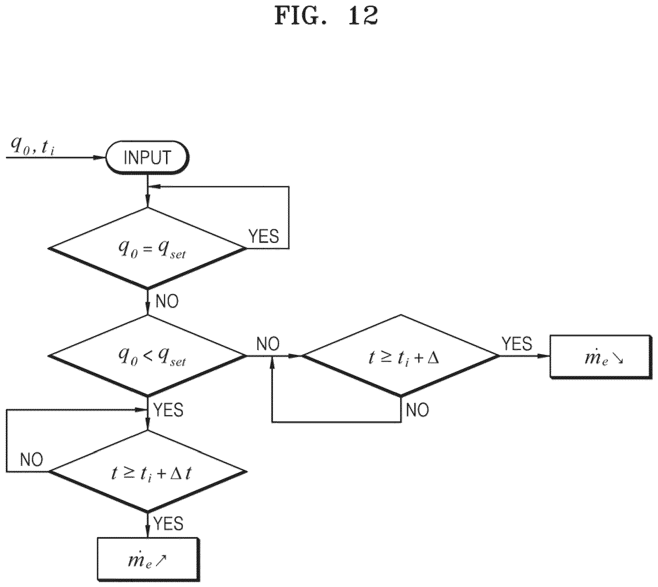

FIG. 12 illustrates a flowchart of a refrigerant flow rate control system according to an embodiment of the technology described in the description.

According to the flowchart, first, whether or not an amount of heat $q_0$ measured on an outer surface of a storage tank is the same as a reference value $q_{set}$ is determined. In the case where the amount of heat $q_0$ measured on the outer surface of the storage tank is not the same as the reference value $q_{set}$, whether or not the amount of heat $q_0$ measured on the outer surface of the storage tank is less than the reference value $q_{set}$ is performed. In the case where the amount of heat $q_0$ measured on the outer surface of the storage tank is the same as the reference value $q_{set}$, the determination process may be repeatedly performed by returning to the beginning.

As a result of the determination, in the case where the amount of heat $q_0$ measured on the outer surface of the storage tank is greater than the reference value $q_{set}$, an operation of comparing a current time t with a time obtained by adding a predicted delay time $\triangle_t$ to a time $t_i$ at which the amount of heat starts to flow into is performed. In the case where the current time t is greater than or equal to the time obtained by the predicted delay time $\triangle_t$ to the time $t_i$ at which the amount of heat starts to flow into, a flow rate of the refrigerant flowing into the storage tank 101 increases by reducing a mass flow rate $m_e$ flowing into the expansion turbine 113. However, in the case where the current time t is less than the time obtained by adding the predicted delay time $\triangle_t$ to the time $t_i$ at which the amount of heat flows into, the determination process may be repeatedly performed by returning to the previous operation.

Even in the case where the amount of heat $q_0$ measured on the outer surface of the storage tank is less than the reference value $q_{set}$, an operation of comparing the current time t with the time obtained by adding the predicted delay time $\triangle_t$ to the time $t_i$ at which the amount of heat starts to flow into is performed. In the case where the current time t is greater than or equal to the time obtained by adding the predicted delay time $\triangle_t$ to the time $t_i$ at which the amount of heat starts to flow into, the mass flow rate $m^-_e$ flowing into the expansion turbine 113 increases to reduce the flow rate of the refrigerant flowing into the storage tank 101. However, in the case where the current time t is less than the time obtained by adding the predicted delay time $\triangle_t$ to the time $t_i$ at which the amount of heat starts to flow into, the determination process may be repeatedly performed by returning to the previous operation.

In the case where the mass flow rate $m^-_e$ of the refrigerant flowing into the expansion turbine 113 increases and the flow rate of the refrigerant flowing into the storage tank 101 decreases, energy is produced to increase efficiency of the refrigerant refrigeration system 110 and decrease an amount of cooling heat $q_r$. In contrast, in the case where the mass flow rate $m^-_e$ of the refrigerant flowing into the expansion turbine 113 decreases and the flow rate of the refrigerant flowing into the storage tank 101 increases, the efficiency of the refrigerant refrigeration system 110 decreases and the amount of cooling heat $q_r$ increases.

The present disclosure may further include a computer program including instructions related to execution of the method to effectively control the methods described above. The computer program is stored in a data storage medium, and the instructions for performing the methods described above are read through a calculator of a computer according to a value input by a user, or a set environment.

The method described above and control thereof may be implemented as a hardware component, a software component, and/or a combination of a hardware component and a software component. For example, the method and components described in embodiments may be implemented by using one or more general-purpose computers or special-purpose computers, such as a processor, a controller, an arithmetical logical unit (ALU), a digital signal processor, a microcomputer, a field programmable gate array (FPGA), a programmable logical unit (PLU), a microprocessor, or any other device capable of executing and responding to instructions. A processing apparatus may execute an operating system (OS) and one or more software applications running on the operating system. In addition, the processing apparatus may access, store, manipulate, process, and generate data in response to execution of software. For convenience of understanding, one processing apparatus is sometimes described as being used, but those skilled in the art may understand that the processing apparatus may include a plurality of processing elements and/or a plurality of types of processing elements. For example, the processing apparatus may include a plurality of processors or one processor and one controller. In addition, other processing components such as parallel processors are also available.

The software may include a computer program, a code, an instruction, or a combination of one or more thereof, and may configure the processing apparatus to operate as desired or command the processing apparatus independently or in combination. The software and/or the data may be permanently or temporarily embodied in any type of machine, component, physical device, virtual device, computer storage medium, or device to be interpreted by the processing apparatus or to provide the instruction or the data to the processing apparatus. The software may also be distributed over a network-connected computer system and stored or executed in a distributed manner. The software and the data may be stored on one or more computer-readable recording media.

The method according to the embodiment may be implemented in the form of program instructions that may be executed through various computer units and recorded on a computer-readable medium. The computer-readable medium may include program instructions, data files, data structures, and the like alone or in combination. The program instructions recorded on the medium may be specially designed and configured for the embodiment or may be known and available to those skilled in the art of computer software. Examples of the computer-readable recording medium include magnetic media such as hard disks, floppy disks, and magnetic tapes, optical media such as CD-ROM and DVD, magneto-optical media such as floptical disks, and hardware devices specifically configured to store and execute program instructions, such as ROM, RAM, and flash memory. Examples of the program instructions include machine language code, such as that produced by a compiler, as well as high-level language code that may be executed by a computer by using an interpreter or the like. The hardware device described above may be configured to operate as one or more software modules to perform the operations of the embodiment, and vice versa.

Although the embodiments have been described according to limited embodiments and drawings as described above, those skilled in the art may make various modifications and changes from the above description. For example, appropriate results may be achieved even in the case where the described technologies are performed in a different order than the described method, and/or components such as systems, structures, apparatuses, circuits, and the like are coupled or combined in a different form than the described method, or replaced or substituted by other components or equivalents.

Therefore, other implementations, other embodiments, and equivalents to claims are also included in claims described below.

[Industrial applicability]

The technology described in the description relates to a liquid hydrogen storage tank ZBO system, and more particularly, to a system for controlling a temperature and pressure inside a storage tank by rapidly operating a refrigerator, by measuring a heat flux on an outer surface of the storage tank and predicting a delay time.

**Claims**

1. A ZBO system for a liquid hydrogen storage tank, the ZBO system comprising:

    a sensor pad attached to one surface of the storage tank;
    a calculator configured to calculate a heat flux value by using the sensor pad; and
    a controller configured to offset heat energy flowing into the storage tank by considering a delay time predicted from the heat flux value.

2. The ZBO system of claim 1, wherein the calculator is configured to calculate the heat flux value by using infrared energy emitted from the sensor pad.

3. The ZBO system of claim 2, further comprising an infrared measurement apparatus configured to measure an amount of infrared energy emitted from the sensor pad, wherein the calculator is configured to receive the amount of infrared energy measured from the infrared measurement apparatus and calculate the heat flux value.

4. The ZBO system of claim 1, wherein operation control of the controller is based on at least one delay time from among a time taken for heat energy to pass through an insulation material of the storage tank and a time for temperature rise due to latent heat.

5. The ZBO system of claim 1, wherein operation control of the controller comprises power control of a refrigerator.

6. The ZBO system of claim 1, wherein operation control of the controller comprises control of a flow rate of a refrigerant of the refrigerator.

7. The ZBO system of claim 6, further comprising a refrigerant refrigeration system, wherein the refrigerant refrigeration system is configured to control at least one of: an expansion turbine; a heat exchanger; a compressor configured to use energy generated from the expansion turbine as power; and an expander.

8. The ZBO system of claim 2, wherein a first surface of the sensor pad is entirely coated with an infrared black coating, and a second surface of the sensor pad is partially coated with the infrared black coating.

9. The ZBO system of claim 8, wherein the calculation of the heat flux value comprises:

    assuming a temperature of a substrate of the sensor pad as a particular value;
    calculating a temperature of the first surface of the sensor pad by using an amount of infrared energy and the assumed temperature of the substrate;
    determining a final temperature of the first surface by repeating assuming and calculating operations until the temperature of the substrate calculated by using the calculated temperature of the first surface is equal to the assumed temperature of the substrate; and calculating a heat flux value outside the storage tank from the final temperature of the first surface.

10. A ZBO method of a liquid hydrogen storage tank, the ZBO method comprising:

    measuring an amount of infrared energy emitted from a sensor pad attached to one surface of the storage tank;
    calculating a heat flux value on an outer surface of the storage tank by using the measured amount of infrared energy; and
    controlling an operation of a controller by considering a delay time predicted from the heat flux value.

11. The ZBO method of claim 10, wherein the control of the operation of the controller comprises at least one of power control of a refrigerator and control of a flow rate of a refrigerant of the refrigerator.

12. The ZBO method of claim 10, wherein the control of the operation of the controller is based on at least one delay time from among a time taken for heat energy to pass through an insulation material of the storage tank and a time for temperature rise due to latent heat.

13. A computer program stored on a medium, the computer program comprising computer-readable instructions configured to perform the method of any one of claims 10 to 12.

FIG. 1

FIG. 2

# FIG. 3

FIG. 4

FIG. 5

FIG. 6

## FIG. 7

$T(x,t)$

$x$

$T_0(t)$

$E_c(t)$

IR

FIG. 8

```
┌─────────────────┐
│      S401       │
└─────────────────┘
         │
         ▼
┌─────────────────┐
│      S402       │◄──────┐
└─────────────────┘       │
         │                │
         ▼                │
┌─────────────────┐       │
│      S403       │       │
└─────────────────┘       │
         │                │
         ▼                │
  NO    ╱╲                │
  ──────  S404 ──────────┘
        ╲╱
         │ YES
         ▼
┌─────────────────┐
│      S405       │
└─────────────────┘
```

FIG. 9

REFRIGERATOR OPERATING TIME

Time

# FIG. 10

FIG. 11

FIG. 12

$q_0, t_i$ → INPUT

$q_0 = q_{set}$ — YES

NO

$q_0 < q_{set}$ — NO → $t \ge t_i + \Delta$ — YES → $\dot{m}_e \searrow$

NO

YES

$t \ge t_i + \Delta t$

NO

YES

$\dot{m}_e \nearrow$

## INTERNATIONAL SEARCH REPORT

| International application No. |
| --- |
| **PCT/KR2022/011840** |

**A.    CLASSIFICATION OF SUBJECT MATTER**

**F17C 13/02**(2006.01)i

According to International Patent Classification (IPC) or to both national classification and IPC

**B.    FIELDS SEARCHED**

Minimum documentation searched (classification system followed by classification symbols)

F17C 13/02(2006.01); F17C 13/00(2006.01); F17C 5/06(2006.01); F17D 3/01(2006.01); F17D 5/00(2006.01); G01K 13/02(2006.01); G01M 3/38(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 액화 가스(liquefied gas), 수소(hydrogen), 탱크(tank), 적외선(infrared ray), 열(heat), 냉각(cooling), 제어(control), 에너지(energy)

**C.    DOCUMENTS CONSIDERED TO BE RELEVANT**

| Category* | Citation of document, with indication, where appropriate, of the relevant passages | Relevant to claim No. |
| --- | --- | --- |
| X | KR 10-2007-0019076 A (K.C.TECH CO., LTD.) 15 February 2007 (2007-02-15)<br>     See paragraphs [0016], [0033] and [0053]-[0054] and figures 1-2 and 5. | 1-12 |
| Y | | 13 |
| Y | JP 2019-185368 A (HIRAYAMA, Shun) 24 October 2019 (2019-10-24)<br>     See claim 2. | 13 |
| A | CN 112944205 A (CHINA ENFI ENGINEERING CORP. et al.) 11 June 2021 (2021-06-11)<br>     See paragraphs [0060] and [0064] and figures 1-2. | 1-13 |
| A | KR 10-2010-0088437 A (DSEC CO., LTD.) 09 August 2010 (2010-08-09)<br>     See paragraph [0038] and figure 5. | 1-13 |
| A | JP 2015-064022 A (IHI CORP.) 09 April 2015 (2015-04-09)<br>     See claim 1 and figure 1. | 1-13 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **07 December 2022** | **08 December 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
**Information on patent family members**

International application No.

**PCT/KR2022/011840**

| Patent document cited in search report | | | Publication date (day/month/year) | Patent family member(s) | | | Publication date (day/month/year) |
|---|---|---|---|---|---|---|---|
| KR | 10-2007-0019076 | A | 15 February 2007 | None | | | |
| JP | 2019-185368 | A | 24 October 2019 | None | | | |
| CN | 112944205 | A | 11 June 2021 | None | | | |
| KR | 10-2010-0088437 | A | 09 August 2010 | KR | 10-1017480 | B1 | 25 February 2011 |
| JP | 2015-064022 | A | 09 April 2015 | JP | 6252069 | B2 | 27 December 2017 |

Form PCT/ISA/210 (patent family annex) (July 2022)